Europäisches Patentamt

European Patent Office

Office européen des brevets

(11) Veröffentlichungsnummer: **0 026 944**
A1

# EUROPÄISCHE PATENTANMELDUNG

(21) Anmeldenummer: 80106137.5

(22) Anmeldetag: 09.10.80

(51) Int. Cl.³: **F 21 Q 1/00, F 21 M 3/02**

(30) Priorität: 09.10.79 AT 6593/79
24.06.80 AT 3317/80
23.06.80 AT 3289/80

(43) Veröffentlichungstag der Anmeldung: 15.04.81
Patentblatt 81/15

(84) Benannte Vertragsstaaten: **AT BE DE FR GB IT NL**

(71) Anmelder: **Irotronic Ltd., Loch Garman (IE)**

(72) Erfinder: **Sassmannshausen, Knut Otto, Rothenbach, D-6580 Idar-Oberstein 3 (DE)**

(74) Vertreter: **Klose, Hans, Dipl.-Phys., Kurfürstenstrasse 32, D-6700 Ludwigshafen (DE)**

(54) Leuchte mit einem Hohlspiegelreflektor, insbesondere Rück-, Sicherungs- oder Signalleuchte oder Scheinwerfer.

(57) Eine Leuchte weist einen Hohlspiegelreflektor (20) und einen auf der Reflektorachse (8) angeordneten Leuchtkörper (18) auf, welcher zwischen dem theoretischen Durchstosspunkt der Reflektorachse (8) durch den Scheitel des Hohlspiegelreflektors (20) und einer Axiallicht-Austrittsöffnung angeordnet ist. Der Hohlspiegelreflektor (20) hat zumindest eine zusätzliche Licht-Austrittsöffnung (26), welche vom Leuchtkörper (18) ausgehendes zusätzliches Licht passieren lässt. Lichtablenkende Mittel sind im zusätzlichen Licht angeordnet, welche es zu einer Horizontalebene, welche senkrecht zur die Reflektorachse (8) einschliessenden Vertikalebene V-K steht, derart ablenken, dass es ein Seitenlichtbündel bildet und teils in dieser beleuchteten Horizontalebene liegt und teils mit dieser beleuchteten Horizontalebene einen vertikalen Winkel einschliesst. Die beleuchtete Horizontalebene P1-T1 liegt ausserhalb der «Leuchtkörper-Horizontalebene P-T», in der der Leuchtkörper (18) liegt.

Anmelder: Irotronic Ltd., Loch Garman, Republik Irland

Leuchte mit einem Hohlspiegelreflektor, insbesondere
Rück-, Sicherungs- oder Signalleuchte oder Scheinwerfer

Die Erfindung betrifft eine Leuchte (insbesondere eine Rück-, Sicherungs- oder Signalleuchte oder einen Scheinwerfer für Fahrzeuge, beispielsweise Kraftfahrzeuge oder Fahrräder, wobei unter einer "Signalleuchte" beispielsweise eine Baustellenleuchte, ein Blinklicht, eine Parkleuchte oder ein Standlicht zu verstehen ist) mit einem* auf der Reflektorachse angeordneten Leuchtkörper, welcher zwischen dem theoretischen Durchstoßpunkt der Reflektorachse durch den Scheitel des Hohlspiegelreflektors und einer Axiallicht-Austrittsöffnung angeordnet ist, wobei der Hohlspiegelreflektor zumindest eine zusätzliche Licht-Austrittsöffnung aufweist, welche vom Leuchtkörper ausgehendes zusätzliches Licht passieren läßt, und wobei lichtablenkende Mittel im zusätzlichen Licht angeordnet sind, welche es zu einer Horizontalebene, welche senkrecht zur die Reflektorachse einschließenden Vertikalebene steht, derart ablenken, daß es ein Seitenlichtbündel bildet und teils in dieser beleuchteten Horizontalebene liegt und teils mit dieser beleuchteten Horizontalebene einen vertikalen Winkel einschließt.

---

\* Hohlspiegelreflektor und mit einem

Der Erfindung liegt die Aufgabe zugrunde, zusätzlich zum Axiallichtbündel ein oder zwei zusätzliche Seitenlichtbündel zu schaffen, welche quer zur Fahrrichtung ausgestrahlt und in Richtung zu einer Horizontalebene umgelenkt werden.

Die Lösung dieser Aufgabe besteht in den Merkmalen des Anspruchs 1.

Bei der Leuchte der deutschen Offenlegungsschrift 26 46 930 ist die beleuchtete Horizontalebene eine Axialebene, das heißt, die beleuchtete Horizontalebene stimmt mit der Leuchtkörper-Horizontalebene überein.

Auch diese bekannte Konstruktion löst bereits die vorliegender Erfindung zugrundeliegende Aufgabe, doch gibt vorliegende Erfindung zur Lösung der gleichen Aufgabe eine neue Konstruktion an, mit welcher die Beschränkung, die beleuchtete Horizontalebene in Höhe des Leuchtkörpers anzuordnen, aufgehoben wird. Die konstruktiven Möglichkeiten werden hierdurch erweitert.

Beispielsweise können nahe beieinander angeordnete Leuchten günstiger in einem einzigen Gehäuse untergebracht werden, wenn vorteilhafterweise die beleuchtete Horizontalebene über der Leuchtkörper-Horizontalebene oder, in anderen Fällen, unter der Leuchtkörper-Horizontalebene liegt (Ansprüche 2 und 3).

Vorteilhaft ist rechts und links der die Reflektorachse einschließenden Vertikalebene jeweils eine seitliche Lichtaustrittsöffnung angeordnet. Eine derartige Leuchte ist als Rückleuchte für einspurige Fahrzeuge (Fahrräder,

0026944

Nicht immer genügt das zusätzliche Seitenlichtbündel, mit einem vertikalen Winkelbereich von zum Beispiel etwa $20^o$ (Bereich +/- $10^o$ beiderseits der Horizontalebene) und weiter Fächerung in der Horizontalebene. Dies wird nachstehend an einem Beispiel erläutert:

Ein Radfahrer muß an einer verkehrsreichen Kreuzung beim Linksabbiegen wegen Gegenverkehrs anhalten. Da sein Fahrrad zum Stillstand kommt, muß er absteigen und stellt sich neben sein Fahrrad. Dabei ergibt es sich oft, daß das Fahrrad nach links geneigt ist, z.B. $6^o$ schrägsteht. Dies hat zur Folge, daß das Seitenlichtbündel auf der linken Seite nur noch um $4^o$ statt, wie in senkrechter Stellung, um $10^o$ steigt. Wenn von links sich ein schwerer Sattelschlepper nähert, dessen Fahrer sich mit seinen Augen 2,50 m über der Fahrbahn befindet, dann verschwindet die Fahrradbeleuchtung für ihn, sobald er sich dem Fahrrad auf etwa 25 Meter genähert hat. Liegt in einem solchen Fall auch noch blendender Gegenverkehr vor, dann kann es zu einem ganz schweren Unfall kommen.

Der Erfindung liegt auch die Aufgabe zugrunde, die Leuchte auch aus Blickrichtungen, welche über dem Seitenlichtbündel liegen, sichtbar zu machen, um der vorstehend geschilderten Gefahr zu begegnen.

Der allgemeine Erfindungsgedanke zur Lösung dieser Aufgabe besteht bei einer Leuchte, die ein Axiallicht und ein Seitenlichtbündel aussendet, darin, daß ein zusätzliches drittes Lichtbündel nach oben ausgesandt wird und daß Lichtstrahlen dieses dritten Lichtbündels in einem eine vertikale Achse einschließenden räumlichen Winkel ausgesandt werden. Dieses dritte Lichtbündel braucht jedoch nur eine geringe Leuchtstärke zu haben, wogegen der "zweite

im Brennraum dieses Rotationsparaboloids angeordnet (Anspruch 11).

Eine Möglichkeit, das Seitenlichtbündel vertikal nach oben zu erweitern besteht darin, daß die lichtablenkenden Mittel derart gestaltet sind, daß sie nur einen Anteil (von vorteilhaft mindestens 50 %, vorzugsweise mindestens 80 %) der durch die Seitenlicht-Austrittsöffnung austretenden Lichtstrahlen zur Bildung des Seitenlichtbündels in im wesentlichen horizontale Richtungen umlenken, wogegen die übrigen Lichtstrahlen unbeeinflußt austreten
(Ansprüche 12 und 13).

Auf diese Weise wird sichergestellt, daß zum Beispiel $10^{\circ}$ oberhalb und $10^{\circ}$ unterhalb der beleuchteten Horizontalebene möglichst viel Licht abgestrahlt wird, um sich seitlich nähernden Verkehr auf große Entfernungen warnen zu können. Hat sich dieser Seitenverkehr bis auf kürzere Entfernungen genähert, so befinden sich die Augen der Fahrer unter Umständen nicht mehr in dem vertikalen Lichtabstrahlbereich von $10^{\circ}$ oberhalb und $10^{\circ}$ unterhalb der beleuchteten Horizontalebene. Dann übernehmen diejenigen Lichtstrahlen des dritten Lichtabstrahlbereiches, die oberhalb dieses genannten Winkelbereiches austreten, die Funktion, die Sichtbarkeit der Leuchte bei der Annäherung bis auf eine Entfernung von nahezu Null aufrecht zu erhalten. Da dies nur auf kurze Entfernungen funktionieren muß, können die Lichtstärken des dritten Lichtabstrahlbereiches wesentlich geringer als die des zweiten oder ersten Lichtabstrahlbereiches sein.

a) im inneren Bereich, zwischen der Leuchtkörper-Horizontaebene und der beleuchteten Horizontalebene, nicht abgelenkt wird,

b) im äußeren Bereich, außerhalb beider Horizontalebenen,
von den lichtablenkenden Mitteln zur beleuchteten Horizontalebene hin abgelenkt wird (Anspruch 16).

Bei dieser zweiten Ausführungsform wird das Seitenlichtbündel im inneren Bereich nicht abgelenkt; es genügt, dort
eine transparente, planparalelle Platte als Gehäusewand
vorzusehen. Dieses Licht des inneren Bereiches bildet den
äußeren Teil des Seitenlichtbündels. Das Seitenlichtbündel
des äußeren Bereiches dagegen wird von den lichtablenkenden
Mitteln stärker zur beleuchteten Horizontalebene hin abgelenkt als in dem erstgenannten Ausführungsbeispiel; dieses
von den lichtablenkenden Mitteln des äußeren Bereiches abgelenkte Licht bildet den inneren Teil des Seitenlichtbündels,
d.h., es läuft quer durch denjenigen Anteil des Seitenlichtbündels, welcher ohne Ablenkung aus dem inneren Bereich austritt.

Eine weitere vorteilhafte Ausführung der erfindungsgemäßen
Leuchte besteht darin, daß die Lichtaustrittsöffnung aus
zwei Schlitzen besteht, welche sich je von der Axiallicht-
Austrittsöffnung bis in die Nähe des Reflektorscheitels
erstrecken (um einen weiten horizontalen Winkelbereich auszuleuchten) und von denen der eine über und der andere unter
der Leuchtkörper-Horizontalebene liegt, und daß jedem
Schlitz lichtablenkende Mittel zugeordnet sind, welche das
durch diesen Schlitz tretende zusätzliche Licht entweder
zu der diesem Schlitz zugeordneten beleuchteten Horizontalebene hin oder von der diesem Schlitz zugeordneten beleucheinem optisch dichteren und einem optisch dünneren Medium
bewirkt wird (Ansprüche 20 und 21).

Die lichtablenkenden Mittel sind vorteilhaft in der Grundform eines Prismas ausgebildet, welches sich quer zum zusätzlichen Licht erstreckt, dessen Basis der Leuchtkörper-
Horizontalebene zugewandt ist und dessen Prismenwinkel derart bemessen ist, daß von dem zusätzlichen Licht ein Bereich, vorteilhaft ein mittlerer Bereich, in die beleuchtete
Horizontalebene abgelenkt wird. Dieser Prismenwinkel ist
somit abhängig von der Anordnung der Lichtaustrittsöffnung
zum Leuchtkörper          und dem Brechungsindex des Materials, aus dem das Prisma besteht.

Der Öffnungswinkel des zusätzlichen Lichtes wird bei der
Umlenkung durch das Prisma etwas vermindert, so daß der
Öffnungswinkel des ausgestrahlten Seitenlichtes etwas geringer ist als der Winkel, in welchem die Lichtaustrittsöffnung (Schlitz) das zusätzliche Licht erfaßt. Je nachdem,
ob man eine weitere Bündelung oder, im Gegenteil, eine
Auffächerung des Seitenlichts wünscht, wird man die lichtablenkenden Mittel insofern von der Idealform eines Prismas
etwas abweichend gestalten, als mindestens eine  seiner
Flächen*          derart gekrümmt ist, daß sich der umlenkenden Wirkung des Prismas eine sammelnde oder streuende
Wirkung überlagert.

Um den Eintritt des zusätzlichen Lichtes in die lichtablenkenden Mittel zu erleichtern, weisen diese, d.h. insbesondere
das Prisma bzw. das prismenähnliche lichtablenkende Mittel,
auf der dem Leuchtkörper zugewandte Seite mindestens eine
konkave Fläche auf. Die andere Fläche des lichtablenkenden

---

* (vorteilhaft zylindrisch)

Fig. 13 einen vergrößerten Ausschnitt aus Fig. 12 zum besseren Verständnis des Strahlenganges,

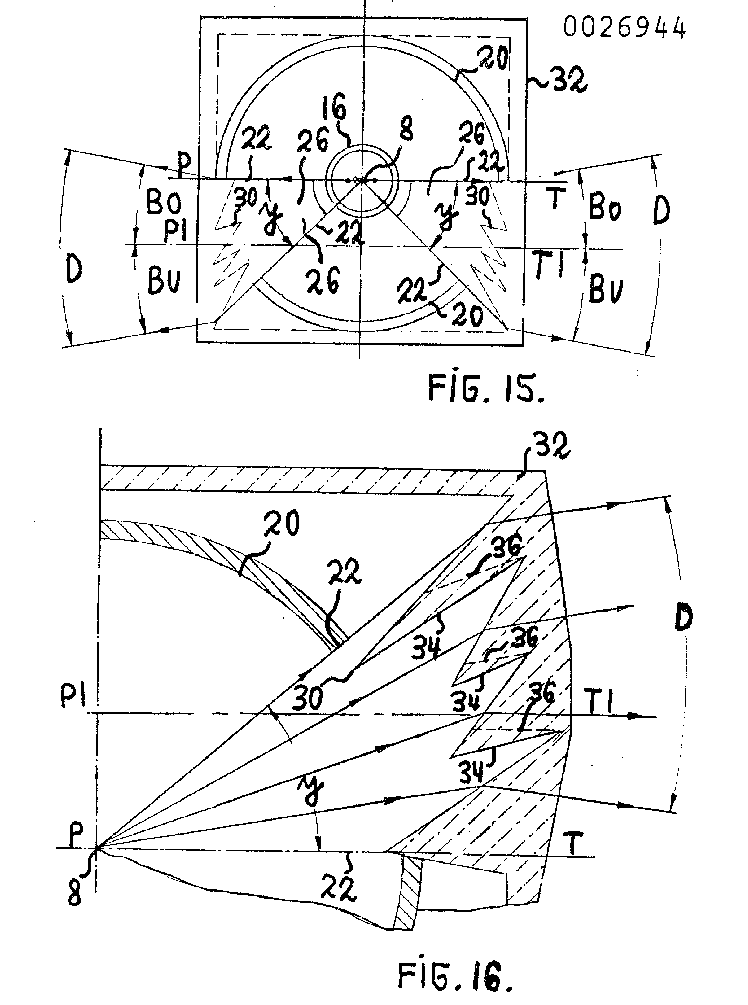

Fig. 14 und 15 erfindungsgemäße Leuchten, bei denen das Seitenlichtbündel nach beiden Seiten, also rechts und links der Leuchte, austreten kann und bei denen die Prismen zusätzlich eine Sammelwirkung in Richtung der Horizontalen haben,

Fig. 16 eine Vergrößerung aus Fig. 14 zum besseren Verständnis des Strahlenganges,

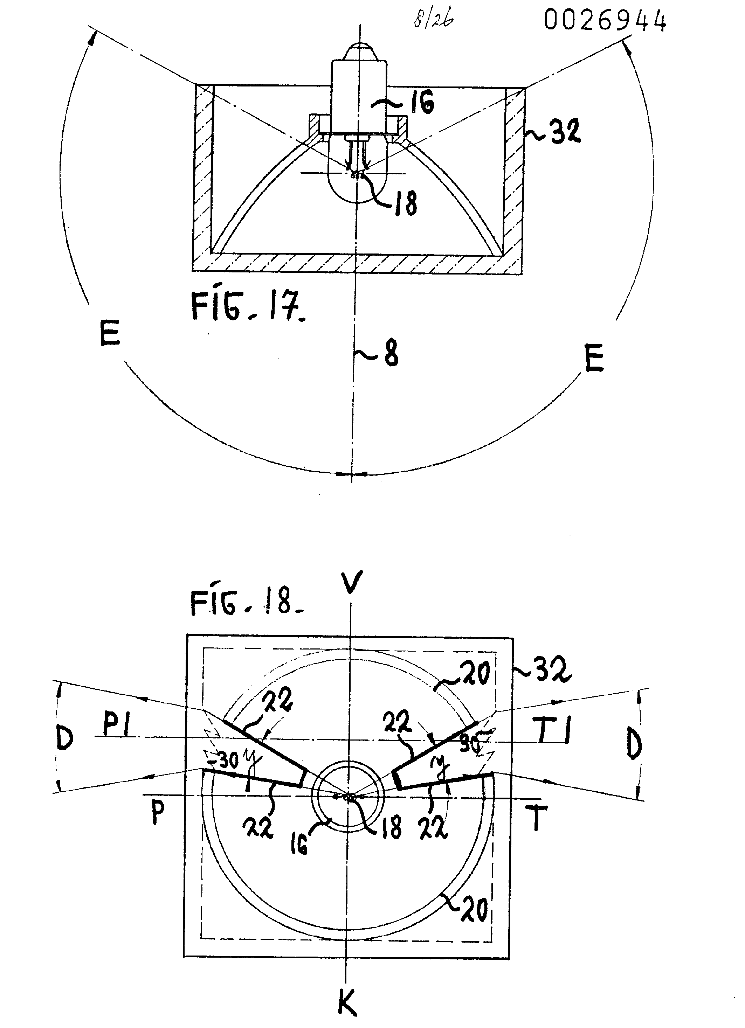

Fig. 17 und 18 eine erfindungsgemäße Leuchte, welche nach rechts und links je ein Seitenlichtbündel aussendet,

Fig. 19 bis 22 den Hohlspiegelreflektor aus Fig. 17 und 18,

Fig. 23 und 24 eine erfindungsgemäße Leuchte, bei der die seitliche Lichtaustrittsöffnung so groß ist, daß die obere Hälfte des Reflektors fehlt,

Fig. 25 bis 28 den Hohlspiegelreflektor aus Fig. 23 und 24,

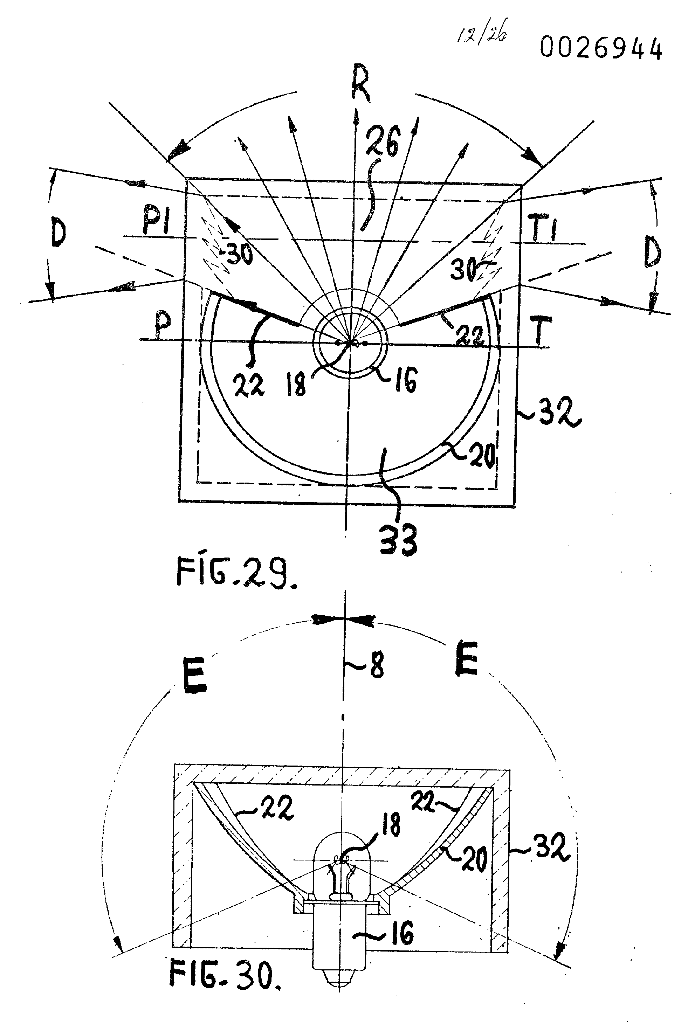

Fig. 29 und 30 eine erfindungsgemäße Leuchte, bei der die seitliche Lichtaustrittsöffnung 26 so groß ist, daß ein großer Bereich in der oberen Reflektorhälfte fehlt,

Fig. 31 und 32 eine erfindungsgemäße Leuchte, wobei eine zusätzliche Lichtaustrittsöffnung angeordnet ist, welche

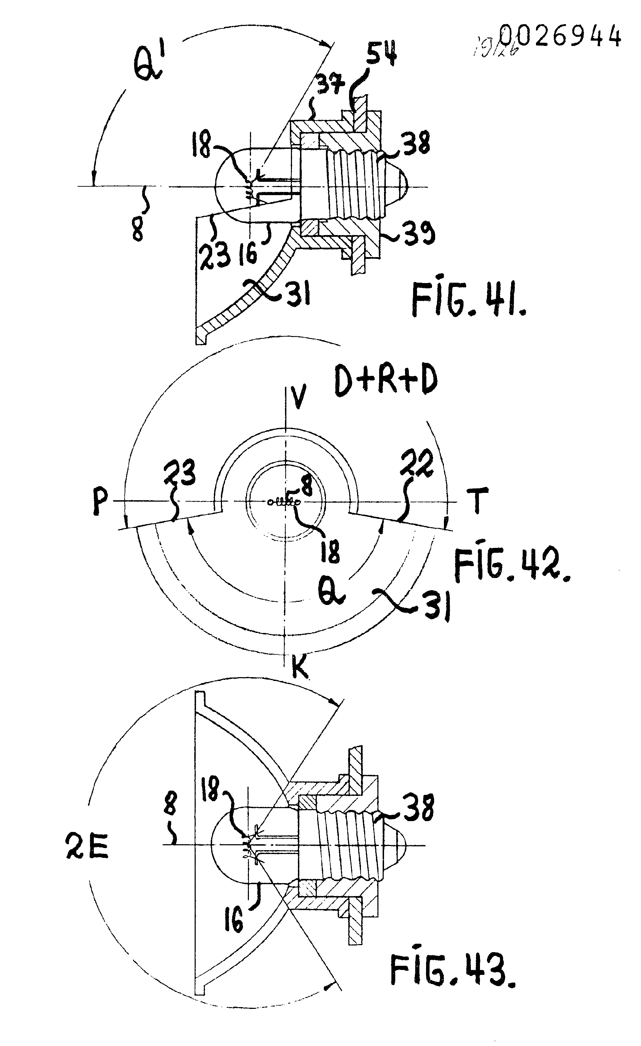

Fig. 42 den Hohlspiegelreflektor der Fig. 39 in derselben Ansicht wie in Fig. 39,

Fig. 43 den Hohlspiegelreflektor der Fig. 39 im axialen Horizontalschnitt (Schnittebene P-T),

Fig. 44 eine erfindungsgemäße Signalleuchte in Blickrichtung in den Reflektor, mit einem unteren, zur Vertikalebene V-K symmetrischen Schlitz,

Fig. 45 und 46 je einen Ausschnitt aus einer erfindungsgemäßen Leuchte mit einem als Prisma ausgebildeten "lichtablenkenden Mittel",

Fig. 47 und 48 ähnliche Abbildungen wie Fig. 45 und 46, mit gekrümmten Flächen am Prisma,

Fig. 49 und 50 ähnliche Abbildungen wie Fig. 45 bis 48, mit stufenförmigen Prismenflächen.

den Mittel, z.B. Prismen, welche im Strahlengang der seitlichen Lichtaustrittsöffnung angeordnet sind.

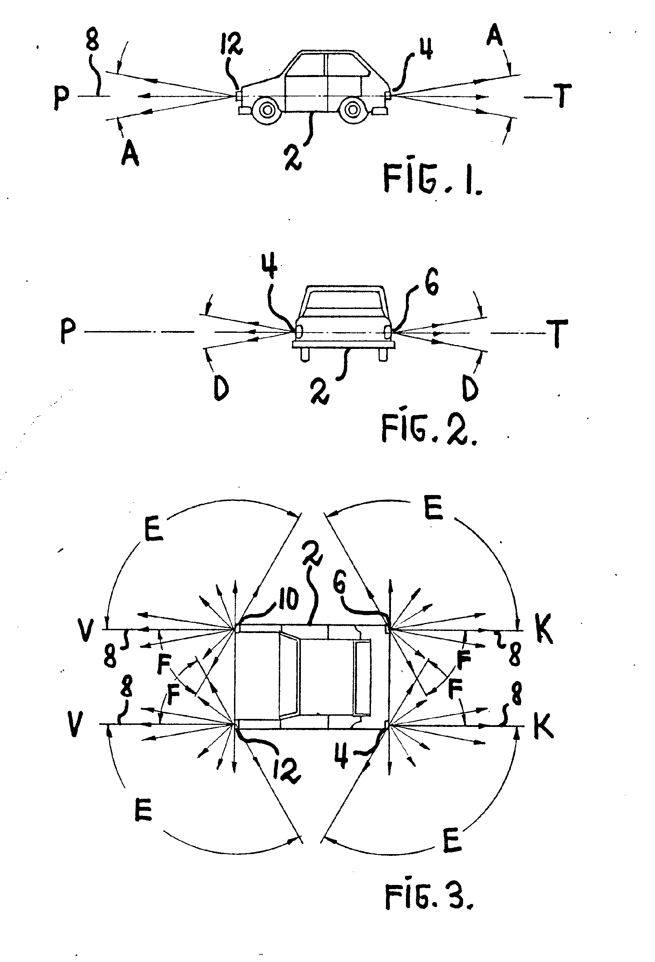

Fig. 3 zeigt das Kraftfahrzeug 2 der Fig. 1 und 2 in Aufsicht. Die eingezeichneten Pfeile bezeichnen die Lichtaustrittsrichtungen, welche einen Lichtfächer bilden. Die Lichtfächer der Leuchten 4, 6, 10 und 12 erstrecken sich in der Leuchtkörper-Horizontalebene P-T (Zeichenebene der Fig. 3) nach außen über einen äußeren Horizontalwinkel E und nach innen über einen inneren Horizontalwinkel F. Im Ausführungsbeispiel der Fig. 3 betragen die äußeren Horizontalwinkel E der Leuchten 4, 6, 10, 12 je 110°, wogegen die inneren Horizontalwinkel F dieser Leuchten je 50° betragen.

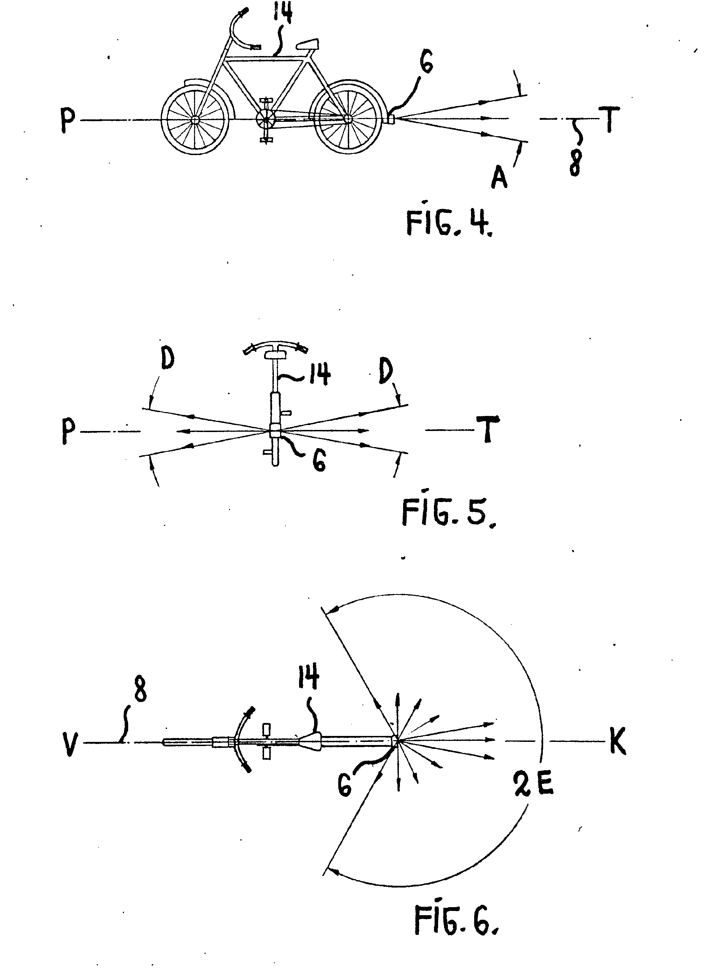

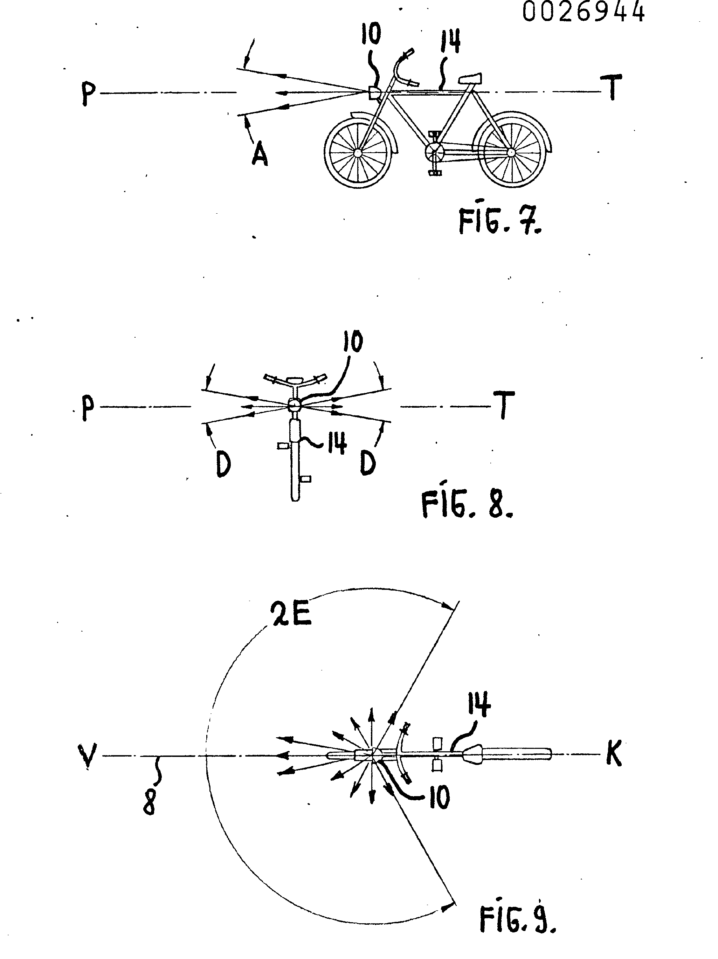

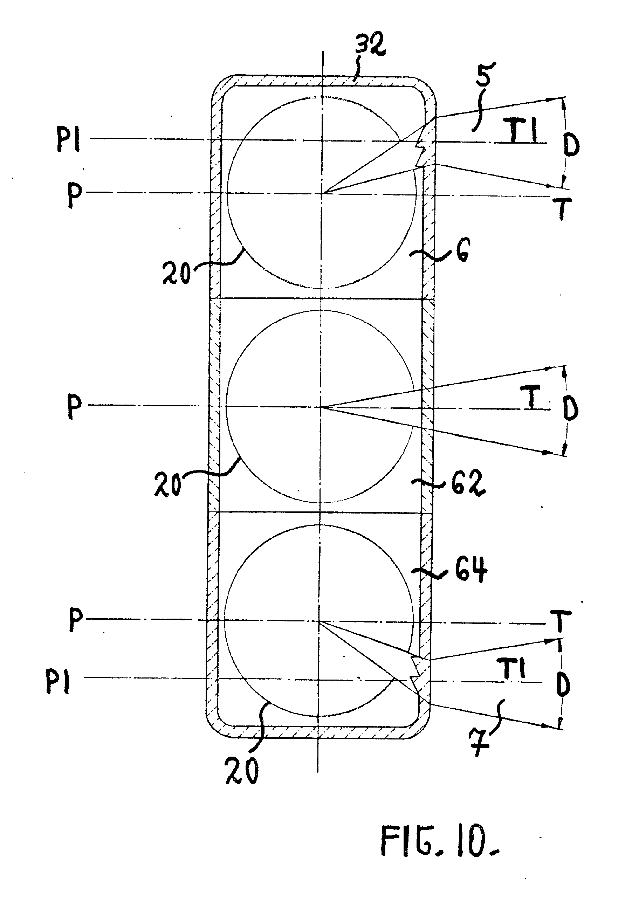

Fig. 4 bis 9 zeigen ein Fahrrad 14 mit einer Schlußleuchte 6 und einer vorderen Positionsleuchte 10. In Bezug auf den hinteren Winkelbereich A, den vorderen Winkelbereich A sowie den seitlichen Öffnungswinkel D wird auf die vorstehenden Ausführungen verwiesen. Im Unterschied zu Fig. 3 jedoch erkennt man in den Fig. 6 und 9 zwei gleiche Horizontalwinkel E, denn bei einem einspurigen Fahrzeug (Fahrrad, Motorrad) müssen die Schlußleuchte 6 und die vordere Standleuchte 10 nach rechts und nach links einen weiten horizontalen Lichtfächer aussenden, um für den Verkehr sichtbar zu sein, der von der Seite kommt.

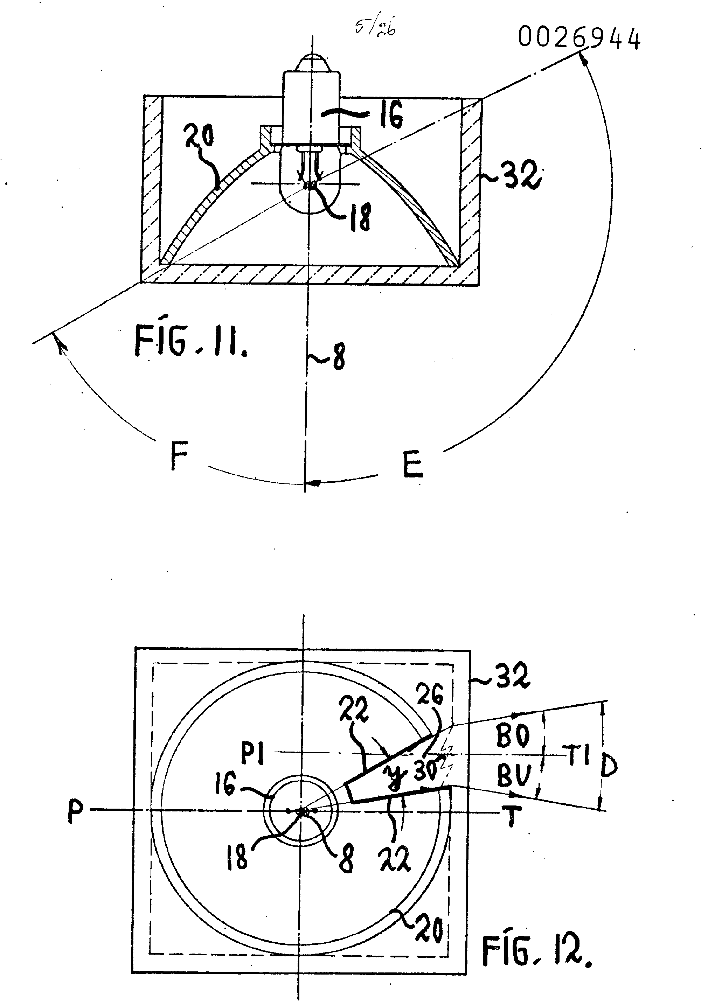

Fig. 10 zeigt in Aufsicht auf die Axiallicht-Austrittsöffnung eine Kraftfahrzeug-Schlußleuchteneinheit mit einer Rückleuchte 6, einer Blinkleuchte 62 und einer Bremsleuchte 64, die von einem gemeinsamen Gehäuse 32 umgeben sind. Die rechte Seitenwand des Gehäuses 32 ist transparent und läßt die Seitenlichtbündel der drei Leuchten austreten. Das Seitenlichtbündel 7 der Bremsleuchte 64 ist nach unten, in Winkelbereich F ergänzt, d.h. durch Licht, welches nach vorn durch die Axiallicht-Austrittsöffnung des Reflektors 20 austritt. Die in den Fig. 11 und 12 dargestellte Leuchte ist vor allen Dingen für zweispurige Fahrzeuge, also Autos, verwendbar, da dort nur nach außen hin ein großer Lichtabstrahlbereich E erreicht werden muß.

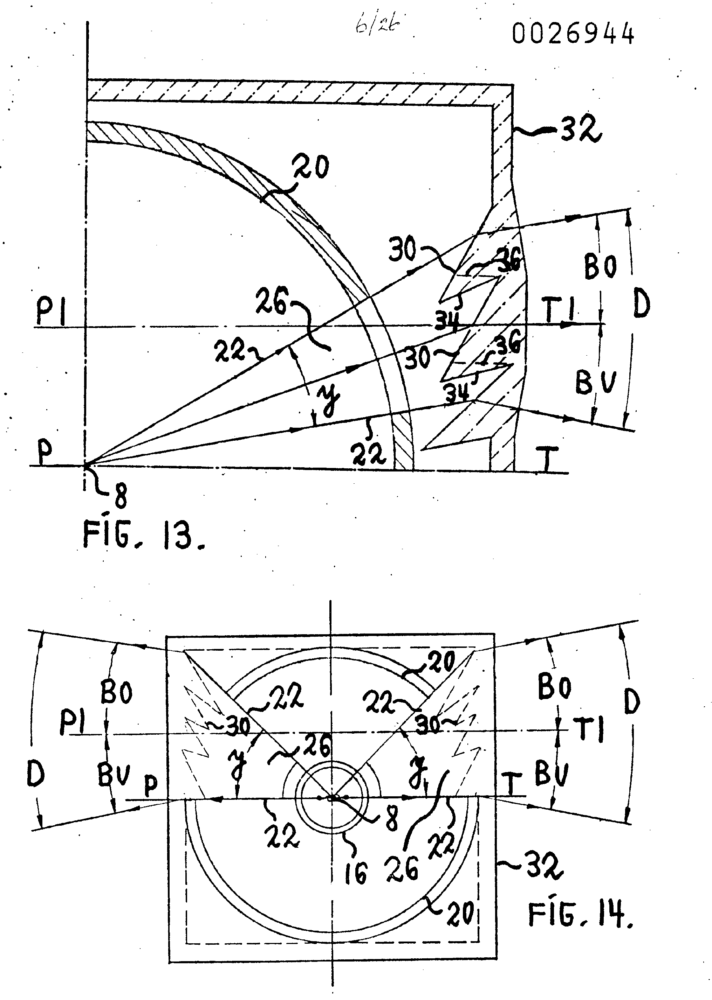

Fig. 13 ist eine Vergrößerung eines Teils der Fig. 12, um den Strahlengang besser erläutern zu können. Der Reflektor 20 hat eine seitliche schlitzförmige Aussparung 26, durch die die Lichtstrahlen seitlich auf die transparente Abdeckkappe 32 im Bereich der Prismen 30 fallen.

Die unteren Flanken 34 dieser Prismen 30 liegen genau in Richtung zur Lichtquelle, das heißt in Richtung zur Reflektorachse 8. Dadurch wird alles Licht, das durch die Lichtaustrittsöffnung 26 auf die Prismen 30 fällt, in den Winkelbereich D hinein umgelenkt. Will man dagegen, daß nicht alles Licht umgelenkt wird, dann kann man die unteren Flanken der Prismen 30 so enden lassen, wie das in den gestrichelten Linien 36 gezeigt wird. Dadurch kann ein kleiner Anteil des Lichts über dem Winkelbereich Bo nach oben hinaus austreten, um so die Sichtbarkeit der Leuchte auf kürzere Entfernungen sicherzustellen. Selbstverständlich könnte man dies auch dadurch tun, daß zwischen den einzelnen Prismen schmale planparallele Abschnitte der transparenten Gehäusekappe 32 stehenbleiben, durch die Licht unabgelenkt in der ursprünglichen Richtung hindurchfallen könnte.

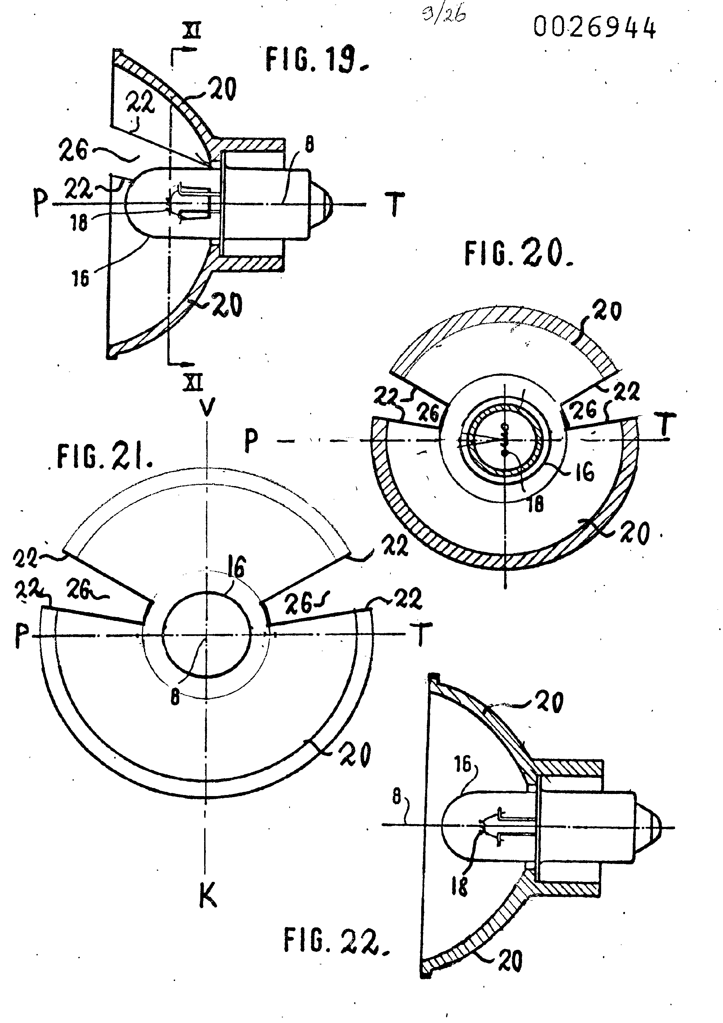

Fig. 19 zeigt einen vertikalen Schnitt durch einen erfindungsgemäßen Hohlspiegelreflektor der Fig. 18. Man erkennt
den Reflektor 20, welcher oberhalb der Leuchtkörper-Horizontalebene P-T eine schlitzförmige zusätzliche seitliche
Lichtaustrittsöffnung 26 aufweist, welche nach oben und
unten durch den Reflektorrand 22 begrenzt ist.

Fig. 20 zeigt einen Schnitt durch den erfindungsgemäßen
Hohlspiegelreflektor entlang der Linie XI-XI in Fig. 19.
Man erkennt hier deutlich die seitlichen schlitzförmigen
zusätzlichen Lichtaustrittsöffnungen 26.

Fig. 21 zeigt eine Ansicht von Fig. 19. Auch hier erkennt
man wieder die schlitzförmigen, sich konisch erweiternden
zusätzlichen seitlichen Lichtaustrittsöffnungen 26. Sie sind
so gestaltet, daß der Öffnungswinkel jeweils zweier sich
gegenüberliegender Punkte auf den Rändern dieser Schlitze,
von dem Lichtschwerpunkt aus gesehen, immer in etwa gleich
ist.

Fig. 22 zeigt einen Schnitt durch den erfindungsgemäßen
Hohlspiegelreflektor entlang der Leuchtkörper-Horizontalebene P-T.

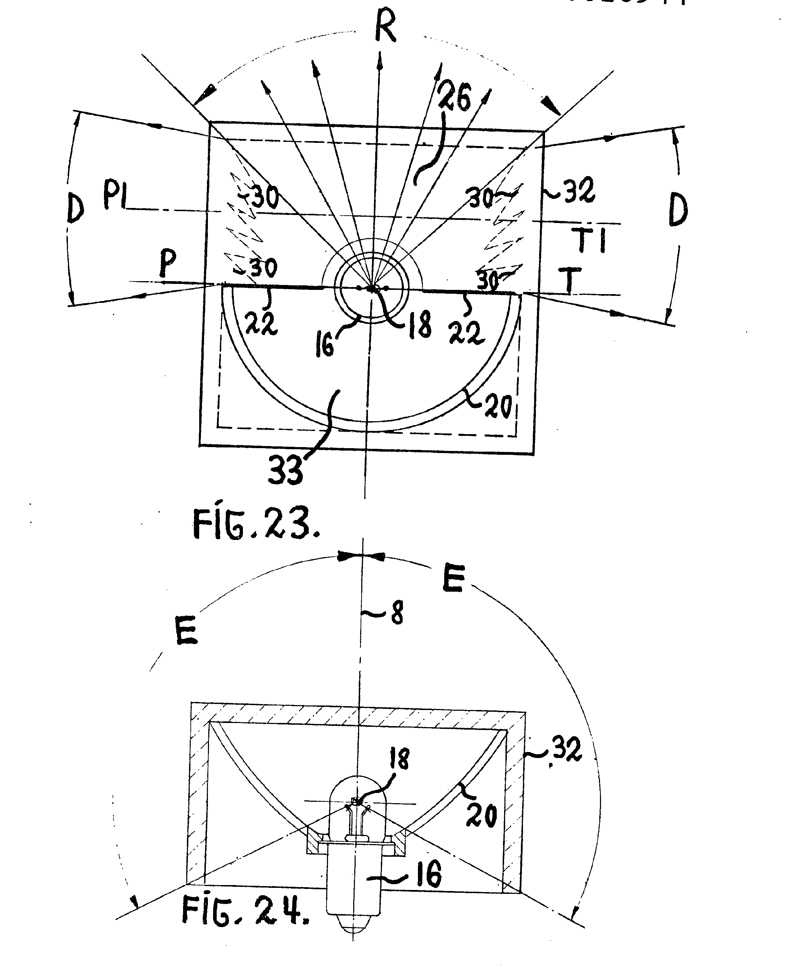

Der Leuchtkörper 18 der Glühlampe 16 der in Fig. 23 dargestellten erfindungsgemäßen Leuchte nimmt zumindest einen
Teil des Brennraumes des Hohlspiegelreflektors 20 ein.
Dieser Hohlspiegelreflektor 20 bündelt die auf ihn treffenden, vom Leuchtkörper 18 unmittelbar ausgehenden Lichtstrahlen zu einem Axiallichtbündel.

hat dieser obere Lichtabstrahlbereich auch noch den Vorteil, daß der Fahrer auf diese Art und Weise während der Fahrt kontrollieren kann, ob seine Schlußleuchte noch brennt.

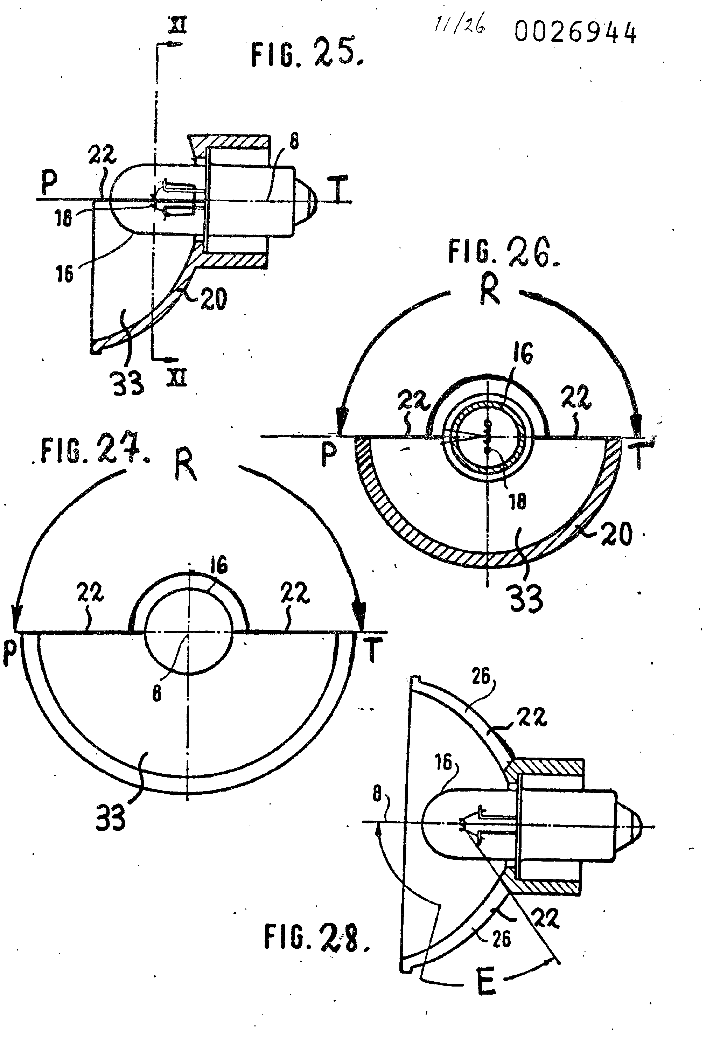

Fig. 24 zeigt einen Schnitt durch Fig. 23 entlang der Leuchtkörper-Horizontalebene P-T. Man erkennt wieder das transparente Gehäuse 32 und den Reflektor 20. Die vom Leuchtkörper 18 ausgehenden Lichtstrahlen werden von den Prismen 30 so in einer Horizontalebene umgelenkt, daß sie in Ergänzung des Axiallichtbündels einen Winkelbereich von 2 E ausleuchten. Im vorliegenden Falle ist E über 110° groß und erstreckt sich von der Reflektorachse 8 des Hohlspiegelreflektors 20 jeweils nach rechts und nach links.

Selbstverständlich sind sehr viele weitere Kombinations- und Ausbildungsmöglichkeiten der Erfindung möglich, ohne den Erfindungsgedanken zu verlassen. Insbesondere könnte man theoretisch in Fig. 23 das Hohlspiegelreflektorsegment 33 auch in der oberen Hälfte des Gehäuses 32 anordnen und die zusätzliche Lichtaustrittsöffnung unten, ohne daß man dadurch den grundsätzlichen Erfindungsgedanken verlassen würde.

Fig. 25 zeigt den Hohlspiegelreflektor 20 der Fig. 23 und 24, von der Seite aus gesehen im Schnitt in der Vertikalebene V-K. Der Reflektor endet an seinem Rand 22, d.h., die obere Hälfte des Reflektors ist überhaupt nicht vorhanden; das Hohlspiegelreflektorsegment 33 ist nur so weit ausgeführt, daß die Aufnahme für die Glühlampe 16 erhalten bleibt.

reflektorsegment 33 insgesamt etwa 220° der 360° erfaßt. Hier wird also das Axiallichtbündel lichtstärker sein als in den Fig. 23 und 24. Auch hier werden die nach oben und seitlich austretenden Lichtstrahlen durch die Prismen 30 in horizontale Richtungen umgelenkt, wodurch eine beleuchtete Horizontalebene P1-T1 entsteht, oberhalb und unterhalb derer die Lichtstrahlen in den Winkelbereich D hinein abgestrahlt werden.

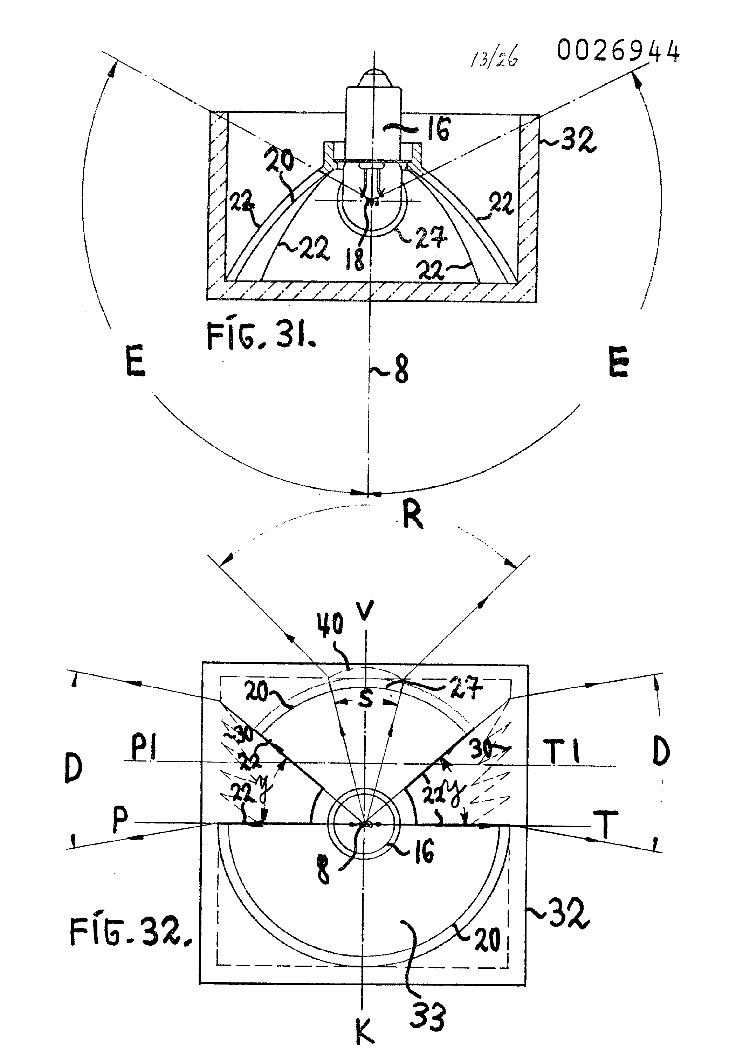

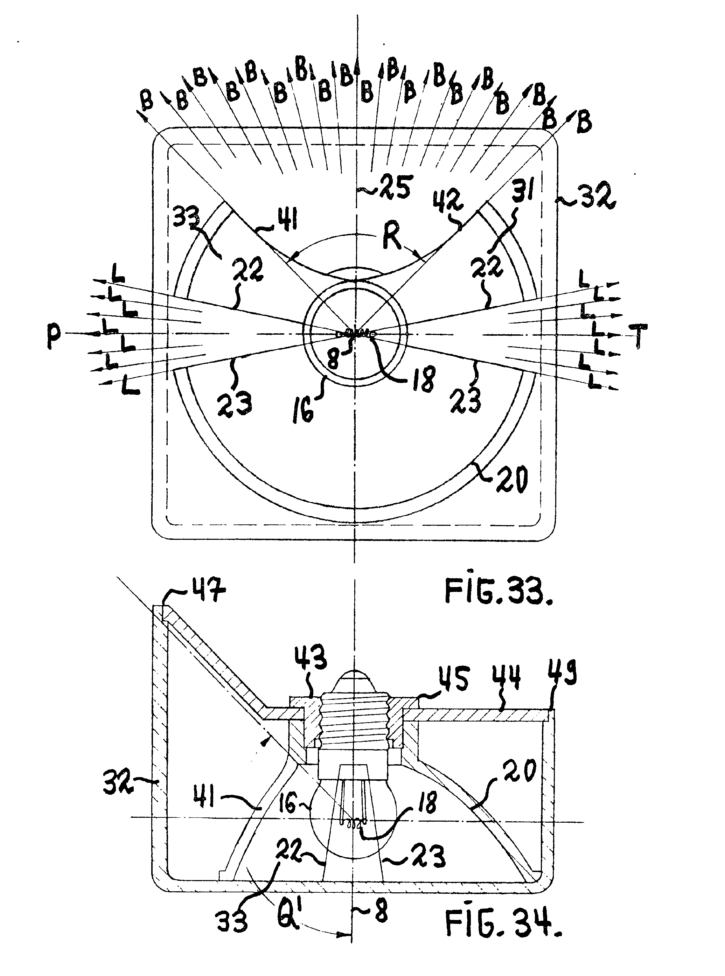

Fig. 31 und 32 zeigen eine ähnliche Leuchte wie Fig. 14. Im Unterschied zu Fig. 14 ist jedoch nach oben eine weitere Lichtaustrittsöffnung 27 angeordnet, durch welche Licht nach oben austreten kann. Über dieser nach oben gerichteten Lichtaustrittsöffnung 27 ist dann ein zerstreuendes optisches System 40 angeordnet, welches den ursprünglich durch die Ränder der Lichtaustrittsöffnung 27 in dem Winkelbereich S eingegrenzten Lichtabstrahlbereich auf R erweitert und so nach oben und zu den Seiten hin weiter sichtbar macht.

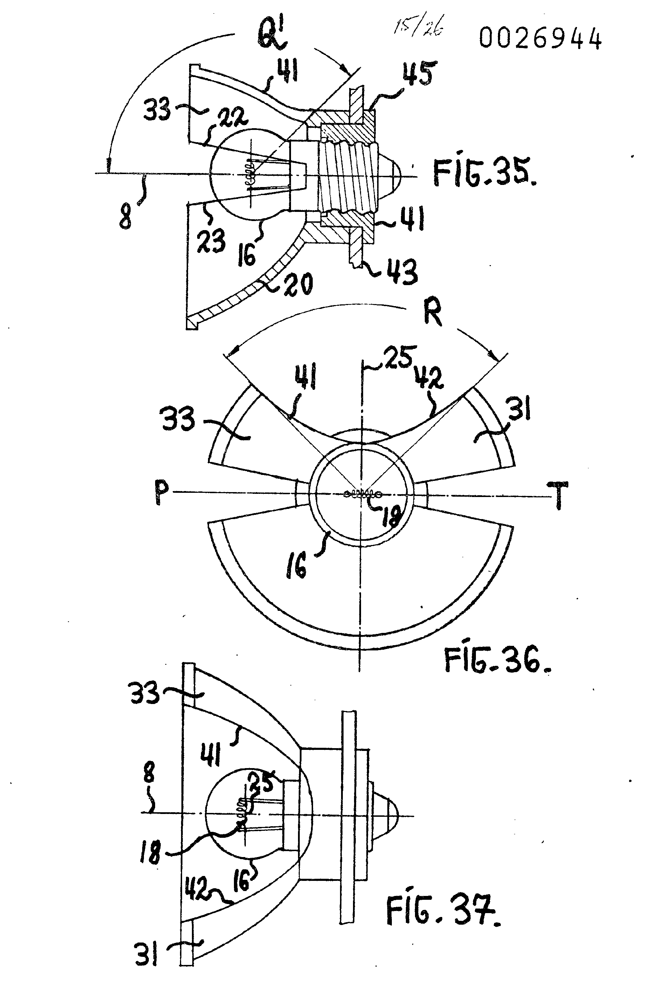

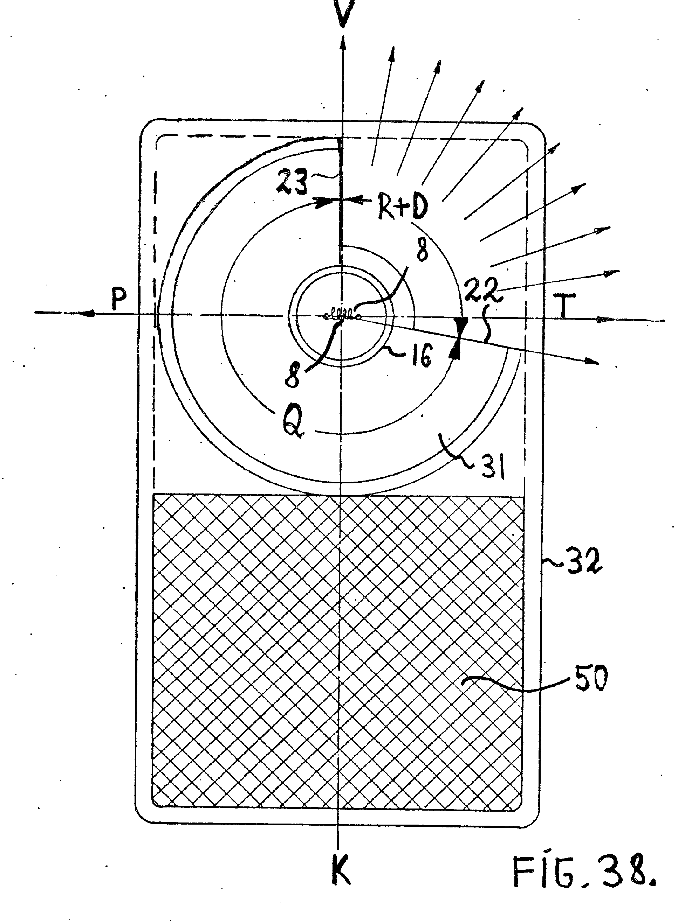

Fig. 33 zeigt eine erfindungsgemäße Schlußleuchte von hinten gesehen, Fig. 34 zeigt die Schlußleuchte der Fig. 33 in einem axialen Vertikalschnitt, Fig. 35 zeigt den Hohlspiegelreflektor der Fig. 33 und 34 ebenfalls in einem axialen Vertikalschnitt, Fig. 36 zeigt den Hohlspiegelreflektor der Fig. 33 und 34 von hinten gesehen, Fig. 37 zeigt eine Ansicht des Hohlspiegelreflektors der Fig. 33 und 34 von oben gesehen.

Die in der Fig. 33 gezeigte Schlußleuchte hat ein rot eingefärbtes transparentes Schlußleuchtengehäuse 32. In diesem Schlußleuchtengehäuse 32 ist ein Hohlspiegelreflektor 20

0026944

Fig. 34 zeigt die Schlußleuchte der Fig. 33 in einem axialen Vertikalschnitt. Man erkennt wieder das transparente Schlußleuchtengehäuse 32 und den Hohlspiegelreflektor 20 sowie die schlitzförmige Aussparung in diesem Hohlspiegelreflektor 20 mit ihren Rändern 22 und 23. Ferner sieht man das über dem Schlitz noch vorhandene Hohlspiegelreflektorsegment 33 mit seinem oberen Rand 41. Man erkennt, daß das von dem Leuchtkörper 18 ausgehende Licht von der Achse 8 des Hohlspiegelreflektors 20 aus gesehen in dem großen Winkelbereich[+)] $Q'$ (von vorzugsweise ca. 135°) nach oben austreten kann. Die Glühlampe 16 ist in einen Fassungsträger 43 eingeschraubt. Dieser Fassungsträger 43 wird möglichst dicht schließend in eine Verschlußplatte 44 so hineingedrückt, bis er mit seinem Anschlag 45 an die Verschlußplatte 44 anschlägt. Die Verschlußplatte 44 ist an den Schweißnähten 47 und 49 vorteilhaft mit dem transparenten Schlußleuchtengehäuse 32 ultraschallverschweißt.

Fig. 35 zeigt den Hohlspiegelreflektor 20 der Fig. 33 und 34 in einem axialen Vertikalschnitt. Man erkennt wieder das Hohlspiegelreflektorsegment 33 mit seinem oberen Rand 41 und seinem unteren Rand 22.

Fig. 36 zeigt den Hohlspiegelreflektor 20 der Fig. 33 und 34 in einer Ansicht von hinten gesehen. Man erkennt die Hohlspiegelreflektorsegmente 31 und 33, welche oberhalb der in der Horizontalebene P-T angeordneten Aussparungen in dem Hohlspiegelreflektor 20 stehen geblieben sind. Ferner sieht man, daß das vom Leuchtkörper 18 der Glühlampe 16 ausgehende Licht nach oben in dem Winkelbereich R von vorteilhaft etwa 90° austreten kann.

---

+) "vertikaler Längswinkel"

spiegelreflektors herum einen Gesamtwinkelbereich von 360°. Von diesen 360° füllt das Hohlspiegelreflektorsegment 31 nur einen Winkelbereich Q[+)] von weniger als 270° aus, wogegen der vom Hohlspiegelreflektorsegment freigelassene ("ausgeschnittene") Winkelbereich R+D mehr als 90° groß ist. Von dem Leuchtkörper 18 aus gesehen kann das Licht nach links oberhalb und unterhalb der Horizontalebene P-T ausstrahlen. Darüber hinaus strahlt das Licht links oberhalb der Horizontalebene P-T bis zur Vertikalebene V-K ab. Lediglich das Licht, was von dem Leuchtkörper 18 in den Winkelbereich Q gerichtet ist, wird von dem Hohlspiegelreflektorsegment 31 in Richtungen gesammelt, welche parallel oder annähernd parallel zur Achse 8 des Hohlspiegelreflektorsegments 31 verlaufen. Auch sollte man dieses vom Hohlspiegelreflektorsegment 31 gesammelte und ausgesandte Lichtbündel soweit auffächern, daß seine Lichtstrahlen zueinander nicht genau parallel sind, sondern mit der Achse 8 einen Winkel bis vorteilhaft etwa 15° einschliessen. Selbstverständlich soll nicht jeder Lichstrahl des Bündels mit der Achse 8 einen Winkel von 15° haben, sondern es sollen auch Lichtstrahlen in dem Lichtbündel vorhanden sein, welche zur Achse 8 genau parallel laufen, dann weitere Lichtstrahlen mit einer kleineren Abweichung und dann Lichtstrahlen, deren Winkel zur Achse 8 immer weiter ansteigt, bis auch einige Lichtstrahlen in dem Lichtbündel vorhanden sind, welche einen Winkel von mindestens 15° mit der Achse 8 bilden. In besonderen Fällen kann es vorteilhaft sein, das Lichtbündel sogar noch weiter aufzufächern.

---

+) "vertikaler Querwinkel"

zueinander nicht genau parallel sind, sondern mit der Achse 8 einen Winkel bis vorteilhaft etwa 15° einschließen. Selbstverständlich soll nicht jeder Lichtstrahl des Bündels mit der Achse 8 einen Winkel von 15° haben, sondern es sollen auch Lichtstrahlen in dem Lichtbündel vorhanden sein, welche zur Achse 8 genau parallel laufen, dann weitere Lichtstrahlen mit einer kleineren Abweichung und dann Lichstrahlen, deren Winkel zur Achse immer weiter ansteigt, bis auch einige Lichtstrahlen in dem Lichtbündel vorhanden sind, welche einen Winkel von mindestens 15° mit der Achse 8 bilden. Ist die Signalleuchte zum Beispiel als Schlußleuchte ausgeführt, dann ist es vorteilhaft, wenn man einen Teil der transparenten roten Abdeckkappe als Rückstrahler 50 ausbildet.

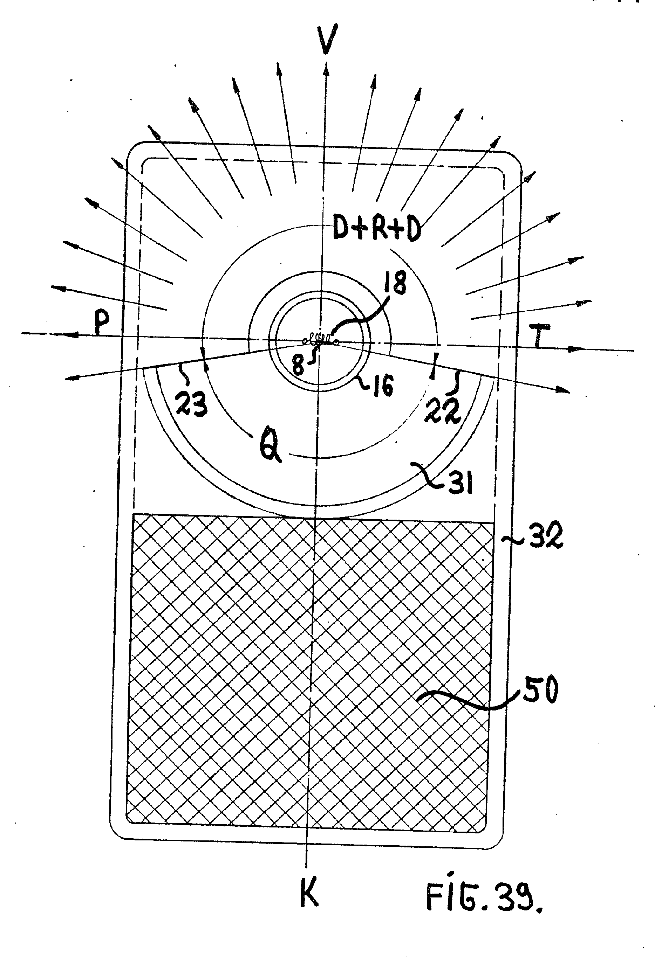

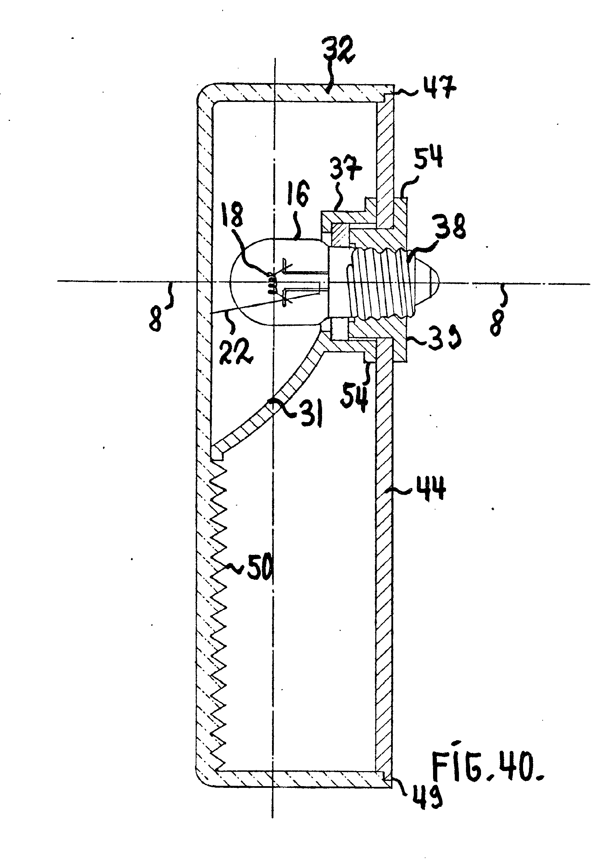

Fig. 40 zeigt einen axialen Vertikalschnitt der Fig. 39. Man erkennt wieder das Hohlspiegelreflektorsegment 31, in dessen Halsansatz 37 ein Glühlampensockel 38 so angeordnet ist, daß der Kolben 16 so in das Hohlspiegelreflektorsegment 31 hineinreicht, daß vorteilhaft ihr Leuchtkörper 18 in der Achse 8 des Hohlspiegelreflektorsegments 31 angeordnet ist, wobei der Leuchtkörper 18 vorteilhaft auch im Brennraum des Hohlspiegelreflektorsegments ist. Der Glühlampensockel 38 ist in eine Glühlampenaufnahme 39 aus leicht verformbaren Kunststoffmaterial eingeschraubt. Diese Glühlampenaufnahme 39 wird dann in die Aufnahmeöffnung der Verschlußplatte 44 so hineingepreßt, daß die zylindrische Wandung der Glühlampenaufnahme 39 eine Dichtfläche 52 mit der kreisrunden Aufnahmeöffnung der Verschlußplatte 44 bildet. Ein überstehender Flansch 54 der Glühlampenaufnahme 39 dient dabei als Anschlag gegenüber der Verschlußplatte 44. Das

0026944

Horizontalebene in dem sehr großen Winkelbereich 2E abstrahlen kann.

Erfindungsgemäß wird also bei der vorliegenden Konstruktion das Licht, welches in Achsrichtung 8 austritt, durch das Hohlspiegelreflektorsegment 31 verstärkt, ohne daß jedoch die Ausstrahlung des Lichts nach den Seiten und nach oben behindert wird. Selbstverständlich sind weitere Modifikationen des Erfindungsgedankens möglich, ohne diesen zu verlassen. Zum Beispiel könnte man den Winkel Q noch kleiner und den Winkel D+R+D noch größer gestalten.

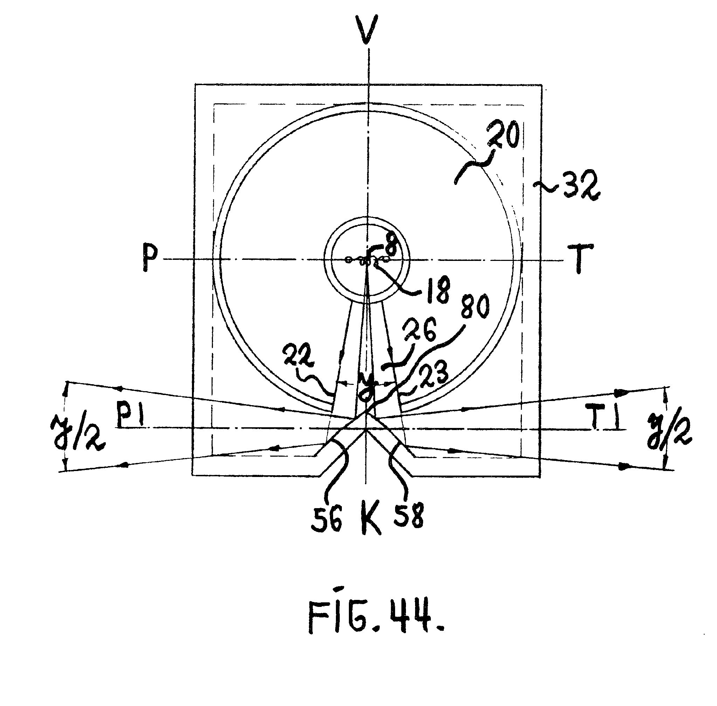

Fig. 44 zeigt eine erfindungsgemäße Leuchte gesehen in Richtung der Reflektorachse 8, in den Hohlspiegelreflektor 20 hinein. Das transparente Leuchtengehäuse 32 ist zur durch die Reflektorachse 8 verlaufenden Vertikalebene V-K symmetrisch ausgebildet. Zwei Schrägwandungen 56 und 58 schneiden sich auf der Vertikalebene V-K in einer Geraden 60, welche zur Reflektorachse 8 parallel verläuft. Auf der der Reflektorachse 8 zugewandten Seite sind diese beiden Schrägwandungen 56 und 58 verspiegelt. Der Reflektor 20 weist einen zur Vertikalebene V-K symmetrischen Schlitz 26 auf, der von den Rändern 22 und 23 begrenzt ist und einen Öffnungswinkel y aufweist.

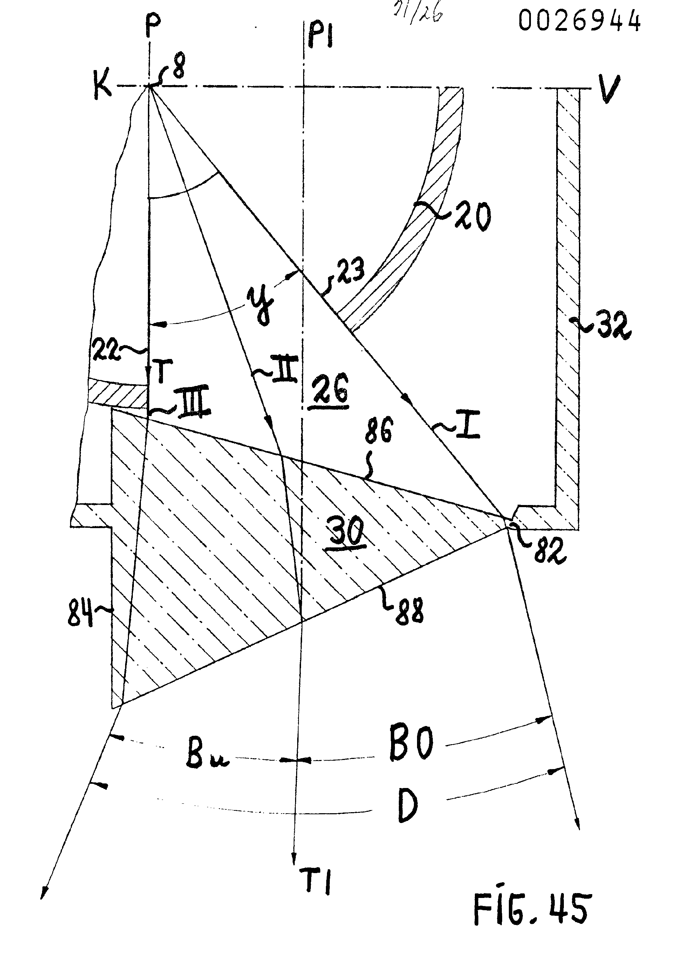

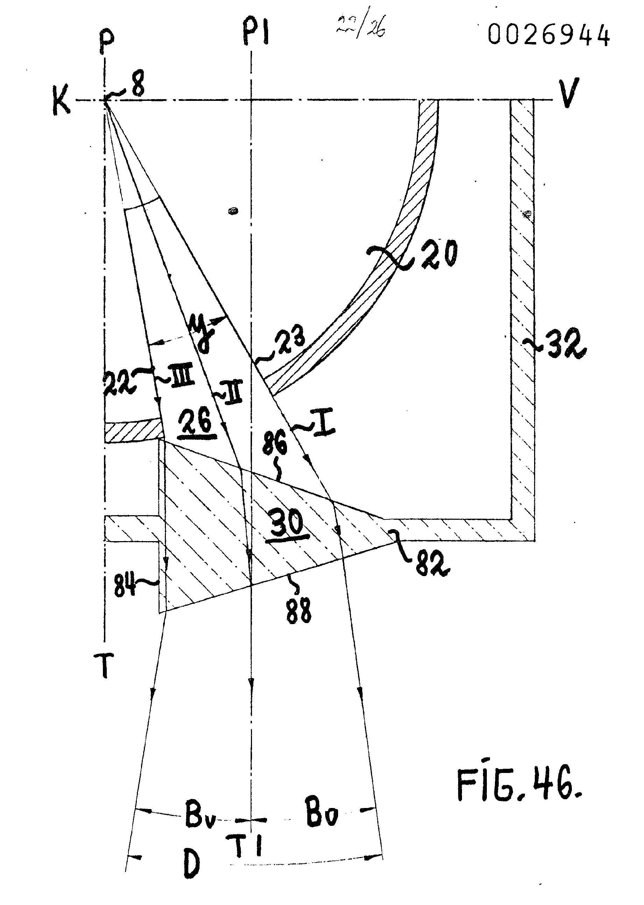

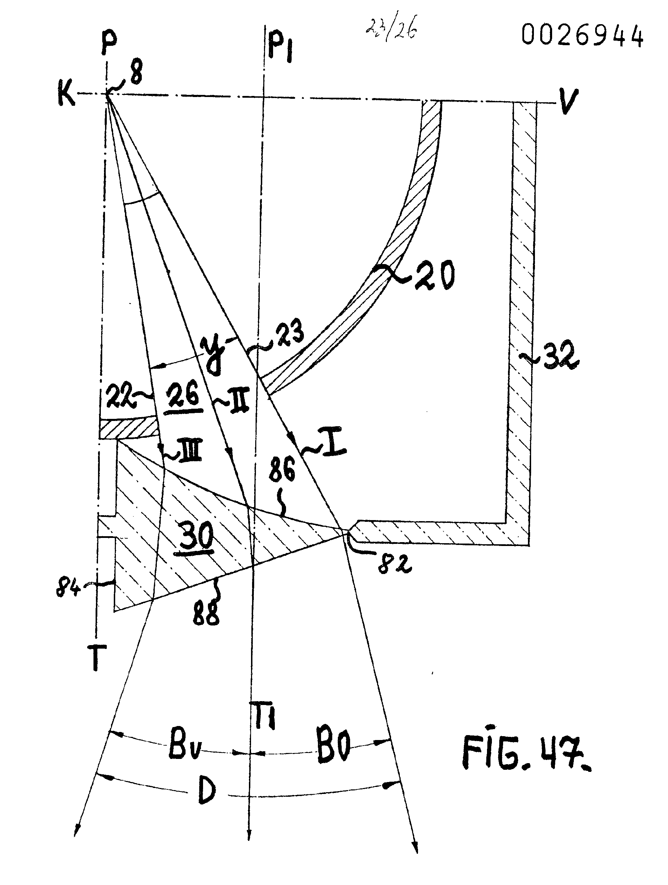

Das vom Leuchtkörper 18 im Winkelbereich y ausgesandte zusätzliche Licht wird von den verspiegelten Flächen der Schrägwandungen 56 und 58, die mit der Vertikalebene V-K einen Winkel von 45$^{\circ}$ einschließen, um 90$^{\circ}$ umgelenkt. Es entstehen zwei Seitenlichtbündel, deren Öffungswinkel jeweils y/2 beträgt.Diese beiden Seitenlichtbündel liegen Öffnungswinkel y zusätzliches Licht aus, wobei dieser Öffnungswinkel y durch die Ränder 22 und 23 eines im Hohlspiegelreflektor 20 angebrachten Schlitzes 26 begrenzt ist. Dieser Hohlspiegelreflektor 20 befindet sich in einem transparenten Leuchtengehäuse 32. In demjenigen Wandbereich des transparenten Leuchtengehäuses 32, auf welchem das zusätzliche Licht auftrifft, sind lichtablenkende Mittel angeordnet; die Fig. 45 bis 50 unterscheiden sich voneinander durch die Ausbildung dieser lichtablenkenden Mittel.

Im zusätzlichen Licht sind in den Fig. 45 bis 50 jeweils bezeichnet:

a) ein oberer (bzw. äußerer) Lichtstrahl I, welcher den Rand 23 berührt,

b) ein mittlerer Strahl II, welcher von den lichtablenkenden Mitteln in die beleuchtete Horizontalebene P1-T1 abgelenkt wird, sowie

c) ein unterer (bzw. innerer) Strahl III, welcher den unteren Rand 22 berührt.

Der Öffnungwinkel D des von den verschiedenen lichtablenkenden Mitteln der Fig. 45 bis 50 ausgesandten Seitenlichtes teilt sich auf in

a) einen unteren (bzw. inneren) Öffnungswinkel Bu, dessen Licht unterhalb der beleuchteten Horizontalebene P1-T1 abgestrahlt wird, und

b) einen oberen (bzw. äußeren) Öffnungswinkel Bo, dessen Licht oberhalb dieser beleuchteten Horizontalebene P1-T1 ausgesandt wird.

Diese unterschiedlichen lichtablenkenden Mittel der Fig. 45 bis 50 werden nachstehend im einzelnen erläutert:

Leuchtkörper abgewandte Fläche 88 konvex ausbildet.

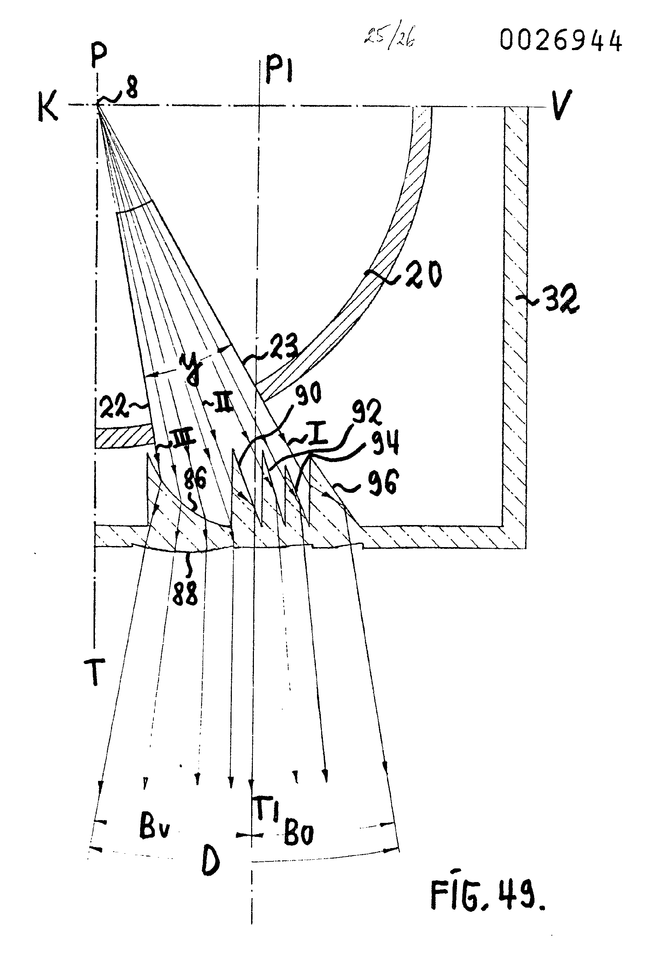

Die in den Fig. 45, 46 und 47 dargestellten Prismen haben zum Teil erhebliche Wandstärken und werden vorteilhafterweise stufenförmig ausgebildet. Ein Beispiel einer stufenförmigen Ausbildung zeigt Fig. 49:

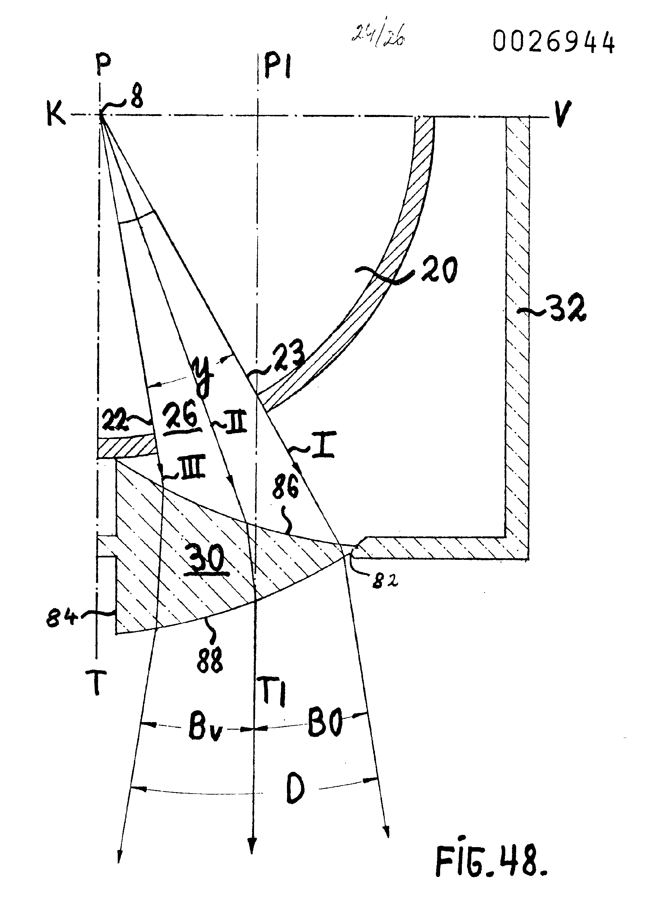

Im inneren Bereich, zwischen der Leuchtkörper-Horizontalebene P-T und der beleuchteten Horizontalebene P1-T1, trifft das zusätzliche Licht auf ein Prisma, welches im Prinzip ähnlich gestaltet ist wie das der Fig. 48: Die dem Leuchtkörper zugewandte Fläche 86 und die vom Leuchtkörper abgewandte Fläche 88 sind konkav bzw. konvex ausgebildet, um die sammelnde Wirkung des Prismas zu kompensieren oder zu überkompensieren. Der äußere Bereich des in Fig. 49 dargestellten lichtablenkenden Mittels, also der Bereich, welcher außerhalb beider Horizontalebenen liegt, lenkt die Lichtstrahlen II und I und alle dazwischenliegenden Strahlen ab in Richtungen, die im Öffnungswinkel Bo liegen. Dieses lichtablenkende Mittel des äußeren Bereiches ist als Stufen-Prisma ausgebildet. Dieses Stufenprisma weist vier Stufenflächen 90, 92, 94 und 96 auf, welche jeweils in Ebenen liegen, in denen auch die Reflektorachse 8 liegt. Die zwischen den Stufenflächen liegenden, dem Leuchtkörper zugewandten, insgesamt vier Einzelflächen, bilden zusammen die "dem Leuchtkörper zugewandte Fläche 86" des Stufenprismas. Durch diese Einzelflächen der dem Leuchtkörper zugewandten Fläche 86 treten die Lichtstrahlen II und I und alle dazwischenliegenden Lichtstrahlen in das Stufenprisma ein und werden an den Stufenflächen 90, 92, 94 und 96 totalreflektiert. Das totalreflektierte Licht

0026944

- 39 -

a) Die Stufenflächen 90, 92, 94 und 96 sind nicht genau zur Reflektorachse hin orientiert, sondern liegen jeweils in Ebenen, welche die die Reflektorachse einschließende Vertikalebene V-K in Geraden 190, 192, 194 und 196 schneiden, welche zwischen der Leuchtkörper-Horizontalebene P-T und der beleuchteten Horizontalebene P1-T1 liegen.

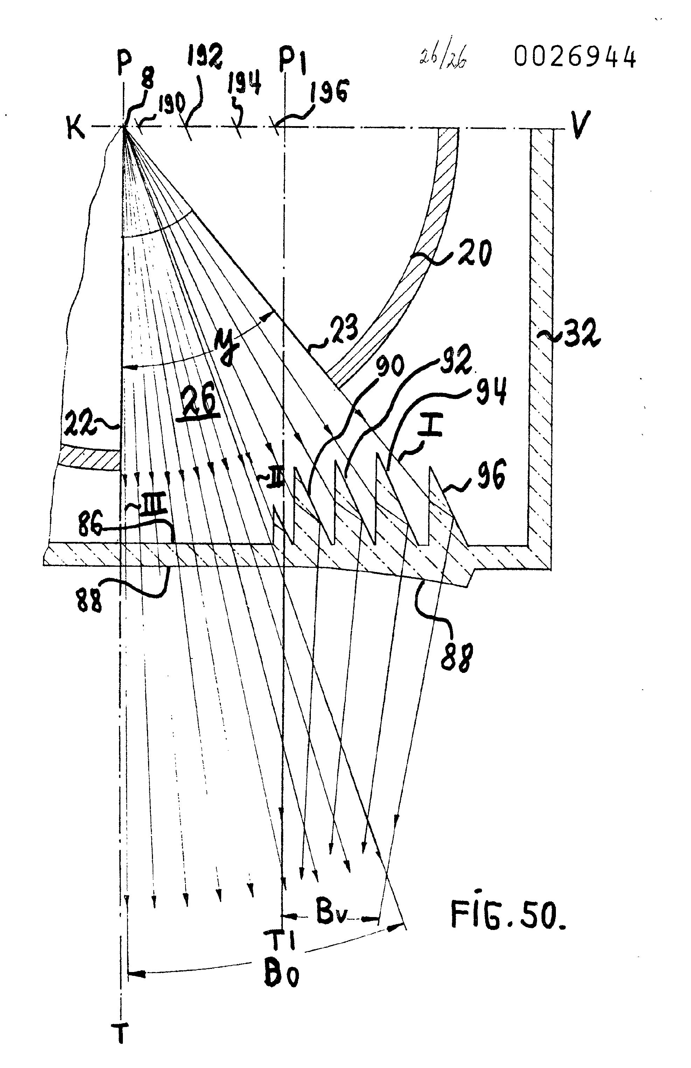

b) Die vom Leuchtkörper abgewandte Fläche 88 des Stufenprismas der Fig. 50 ist leicht konkav ausgebildet, wogegen die entsprechende Fläche des Stufenprismas der Fig. 49 leicht konvex ausgebildet ist.

0026944

Patentansprüche

1. Leuchte mit einem Hohlspiegelreflektor (20) und mit einem auf der Reflektorachse (8) angeordneten Leuchtkörper (18), welcher zwischen dem theoretischen Durchstoßpunkt der Reflektorachse (8) durch den Scheitel des Hohlspiegelreflektors (20) und einer Axiallicht-Austrittsöffnung angeordnet ist, wobei der Hohlspiegelreflektor (20) zumindest eine zusätzliche Licht-Austrittsöffnung (26) aufweist, welche vom Leuchtkörper (18) ausgehendes zusätzliches Licht passieren läßt, und wobei lichtablenkende Mittel im zusätzlichen Licht angeordnet sind, welche es zu einer Horizontalebene, welche senkrecht zur die Reflektorachse (8) einschließenden Vertikalebene (V-K) steht, derart ablenken, daß es ein Seitenlichtbündel bildet und teils in dieser beleuchteten Horizontalebene liegt und teils mit dieser beleuchteten Horizontalebene einen vertikalen Winkel einschließt, dadurch gekennzeichnet, daß die beleuchtete Horizontalebene (P1-T1) außerhalb der "Leuchtkörper-Horizontalebene (P-T)" liegt, in der der Leuchtkörper (18) liegt.

2. Leuchte nach Anspruch 1, dadurch gekennzeichnet, daß die beleuchtete Horizontalebene (P1-T1) über der Leuchtkörper-Horizontalebene (P-T) liegt.

3. Leuchte nach Anspruch 1, dadurch gekennzeichnet, daß die beleuchtete Horizontalebene (P1-T1) unter der Leuchtkörper-Horizontalebene (P-T) liegt.

von 140° bis 170°, um die Reflektorachse (8) erfaßt und
in Achsrichtung ausstrahlt.

10. Leuchte nach Anspruch 9, dadurch gekennzeichnet, daß
das Hohlspiegelreflektorsegment (33) symmetrisch zu einer
die Reflektorachse (8) einschließenden Vertikalebene (V-K)
ist.

11. Leuchte nach einem der Ansprüche 9 oder 10, dadurch
gekennzeichnet, daß das Hohlspiegelreflektorsegment (33)
Teil eines Rotationsparaboloids ist und daß der Leuchtkörper (18) im Brennraum des Rotationsparaboloids angeordnet ist.

12. Leuchte nach einem der Ansprüche 1 oder folgenden,
dadurch gekennzeichnet, daß die lichtablenkenden Mittel
(30) so gestaltet sind, daß sie nur einen Anteil der seitlich austretenden Lichtstrahlen in im wesentlichen horizontale Richtungen (D) umlenken, wogegen ein anderer Teil
oberhalb des Winkels (D) austritt (Fig. 13 und 16).

13. Leuchte nach Anspruch 12, dadurch gekennzeichnet, daß
der Anteil mindestens 50 % beträgt.

14. Leuchte nach einem der Ansprüche 1 oder folgenden,
dadurch gekennzeichnet, daß dieser Leuchte ein Rückstrahler zugeordnet ist.

15. Leuchte nach einem der Ansprüche 1 bis 14, dadurch
gekennzeichnet, daß die Lichtaustrittsöffnung als Schlitz
ausgebildet ist, welcher sich von der Axiallicht-Austrittsöffnung bis in die Nähe des Reflektorscheitels erstreckt, und daß die lichtablenkenden Mittel (30) in der
Vertikalen das zusätzliche Licht (Fig. 45 bis 49)

18. Leuchte nach einem der Ansprüche 1 bis 14, dadurch gekennzeichnet, daß die Lichtaustrittsöffnung aus zwei Schlitzen besteht, welche sich je von der Axiallicht-Austrittsöffnung bis in die Nähe des Reflektorscheitels erstrecken und von denen der eine über und der andere unter der Leuchtkörper-Horizontalebene (P-T) liegt und daß jedem Schlitz lichtablenkende Mittel zugeordnet sind, welche das durch diesen Schlitz tretende zusätzliche Licht von der diesem Schlitz zugeordneten beleuchteten Horizontalebene (P1-T1) hinweg ablenken.

19. Leuchte nach einem der Ansprüche 1 bis 14, dadurch gekennzeichnet, daß die die Reflektorachse (8) einschließende Vertikalebene (V-K) durch die zusätzliche Lichtaustrittsöffnung verläuft, welche als Schlitz (26) ausgebildet ist, und daß die lichtumlenkenden Mittel als Spiegel (56,59) ausgebildet sind, welche das zusätzliche Licht zu einer Seite oder zu zwei Seiten als Seitenlicht umlenken (Fig. 44).

20. Leuchte nach einem der Ansprüche 15 bis 18, dadurch gekennzeichnet, daß die lichtablenkenden Mittel die Lichtablenkung durch Brechung an der Grenzfläche zwischen einem optisch dichteren und einem optisch dünneren Medium bewirken (Fig. 45 bis 48).

21. Leuchte nach einem der Ansprüche 15 bis 18, dadurch gekennzeichnet, daß die lichtablenkenden Mittel die Lichtablenkung durch Totalreflexion an der Grenzfläche zwischen einem optisch dichteren und einem optisch dünneren Medium bewirken (Fig. 45 bis 49).

FIG.1.

FIG.2.

FIG.3.

0026944

FIG. 4.

FIG. 5.

FIG. 6.

0026944

10  14

P ———————————————————— T

A

FIG. 7.

10

P ———————————————————— T

D      14      D

FIG. 8.

2E

V ———————————————————— K

8

14

10

FIG. 9.

FIG. 10.

0026944

FIG. 11.

20

16

18

32

8

F

E

---

FIG. 12.

32

26

22

BO

TI

PI

D

P

16

y 30

BU

18

8

22

20

T

FIG. 13.

FIG. 14.

0026944

FIG. 15.

FIG. 16.

FÍG. 17.

~16

~32

~18

E                    E

~8

FÍG. 18.        V

~20   ~32

22

PI      22      TI

D      30      30      D

P      30      T

22   16      18   22

22

~20

K

FIG.19.

22    20

26

P  22              T
18
16

20

FIG.20.

20

22  26        26  22    T

16
18

20

FIG.21.

22
22  26          26    22
P              T

16

8

20

K

FIG.22.

20

16

8

18

20

FIG. 23.

FIG. 24.

FIG. 25.

FIG. 26.

FIG. 27.

FIG. 28.

FIG.29.

FIG.30.

FIG. 31.

FIG. 32.

FIG.33.

FIG.34.

Q'

41    45

33    22

8    FIG.35.

23    16    41

20    43

R

41    25    42

33    31

P    T

18

16

FIG.36.

33

41    25

8

18

42    16    FIG.37.

31

0026944

FIG.38.

0026944

FIG.39.

FIG. 40.

$Q^I$

54

37

18

38

8

23 16

39

31

**FIG. 41.**

D+R+D

V

23

P

8

22

T

18

Q

31

**FIG. 42.**

K

8

18

2E

38

16

**FIG. 43.**

FIG.44.

FIG. 45

FIG.46.

FIG. 47.

0026944

FIG.48.

FIG. 49.

25/26

0026944

FIG.50.

Europäisches
Patentamt

**EUROPÄISCHER RECHERCHENBERICHT**

0026944

Nummer der Anmeldung

EP 80 10 6137

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - C - 473 024 (BOREL)<br><br>* Abbildung 1 *<br><br>-- | 1,3 |
| | US - A - 1 803 900 (GODIN)<br><br>* Seite 1, Zeilen 31-59 *<br><br>-- | 1,3 |
| | FR - A - 1 575 749 (PROJECTEURS CIBIE)<br><br>* Seite 4, Zeilen 29-34 *<br><br>---- | 1,2,3 |

**KLASSIFIKATION DER ANMELDUNG (Int. Cl.³)**

F 21 Q 1/00
F 21 M 3/02

**RECHERCHIERTE SACHGEBIETE (Int. Cl.³)**

F 21 M
B 60 Q
F 21 Q
B 62 J

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 13-01-1981 | FOUCRAY |

EPA form 1503.1   06.78